# EUROPEAN PATENT SPECIFICATION

(11) **EP 2 238 882 B1**
(45) Date of publication and mention of the grant of the patent: **20.04.2016**
(21) Application number: 09011940.5
(22) Date of filing: 18.09.2009
(51) Int. Cl.: A47J 42/04, A47J 42/44, A47J 42/46

(54) **Pepper mill**
Pfeffermühle
Moulin à poivre

(30) Priority: 09.02.2009 TW 98104072
(43) Date of publication of application: 13.10.2010
(73) Proprietor: Yienn Lih Enterprise Co., Ltd, Tainan, Taiwan (TW)
(72) Inventor: Fang, Ming-Hui, Tainan City (TW)
(74) Representative: Schenk, Markus

(56) References cited:
- DE-U1- 20 300 450

## Description

The invention relates to a grinder, more particularly to a pepper mill.

A conventional pepper mill generally has a receiving unit for receiving peppercorns therein, and a grinding unit disposed in a bottom part of the receiving unit for grinding the peppercorns into ground pepper. The grinding unit generally includes a stationary annular outer grinding seat, and an inner grinding seat disposed within the outer grinding seat, cooperating with the outer grinding seat to define a grinding opening therebetween, and rotatable relative to the outer grinding unit for grinding the peppercorns into ground pepper discharged through the grinding opening.

However, after use, when the conventional pepper mill is put on a cabinet or a dining table, a portion of residual ground pepper will fall out of the conventional pepper mill and scatter on the cabinet or the dining table, thereby making the cabinet or the dining table untidy.

US4771955 relates to a pepper mill closure. A pepper mill is provided with an end closure for releasably closing the outfeed opening of the pepper mill against unintentional discharge of ground pepper therefrom. The closure apparatus of this invention is configured as a mechanically operated shield, either integral with a removably attachable to the outfeed end of the pepper mill, the shield serving to selectively.permit or prevent passage of ground pepper out of the mill.

Therefore, the object of the present invention is to provide a pepper mill capable of preventing residual ground pepper from falling out therefrom.

Accordingly, a pepper mill of the present invention comprises a hollow receiving unit, a grinding unit, and a closure unit. The receiving unit surrounds an axis, defines a receiving space for receiving peppercorns, and has a discharge end for discharging ground pepper. The grinding unit includes a coupling shaft that is disposed rotatably in the receiving space and that has a shaft hole extending therethrough along the axis. The grinding unit is operable for grinding the peppercorns in the receiving space to result in the ground pepper. The closure unit includes an elongated connecting rod that extends movably through the shaft hole along the axis, and a closure member that is secured co-movably to the connecting rod, and that is disposed under the grinding unit. Movement of the connecting rod along the axis results in corresponding movement of the closure member relative to the grinding unit between a closed position for blocking discharge of the ground pepper through the discharge end of the receiving unit, and an opened position for permitting discharge of the ground pepper through the discharge end of the receiving unit.

Other features and advantages of the present invention will become apparent in the following detailed description of the preferred embodiments with reference to the accompanying drawings, of which:
Fig. 1 is a fragmentary sectional view of a first example of a pepper mill, illustrating a closure member at a closed position;
Fig. 2 is a view similar to Fig. 1, but illustrating the closure member at an opened position;
Fig. 3 is a fragmentary sectional view of a second example of the pepper mill, illustrating the closure member at the closed position;
Fig. 4 is a fragmentary exploded perspective view of the second example;
Fig. 5 is a view similar to Fig. 3, but illustrating the closure member at the opened position;
Fig. 6 is a fragmentary sectional view of the pepper mill according to the invention, illustrating the closure member at the closed position; and
Fig. 7 is a view similar to Figs. 6, but illustrating the closure member at the opened position.

Before the present invention is described in greater detail, it should be noted that like elements are denoted by the same reference numerals throughout the disclosure.

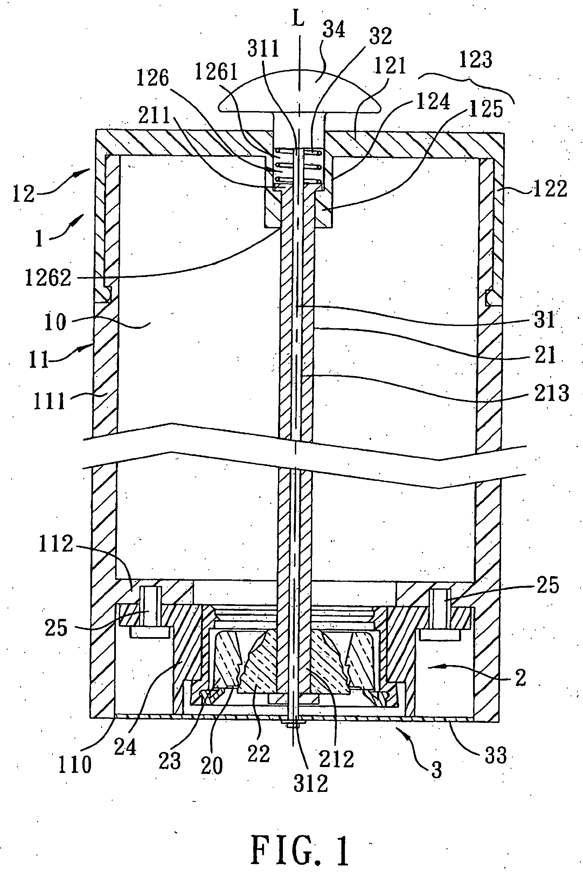

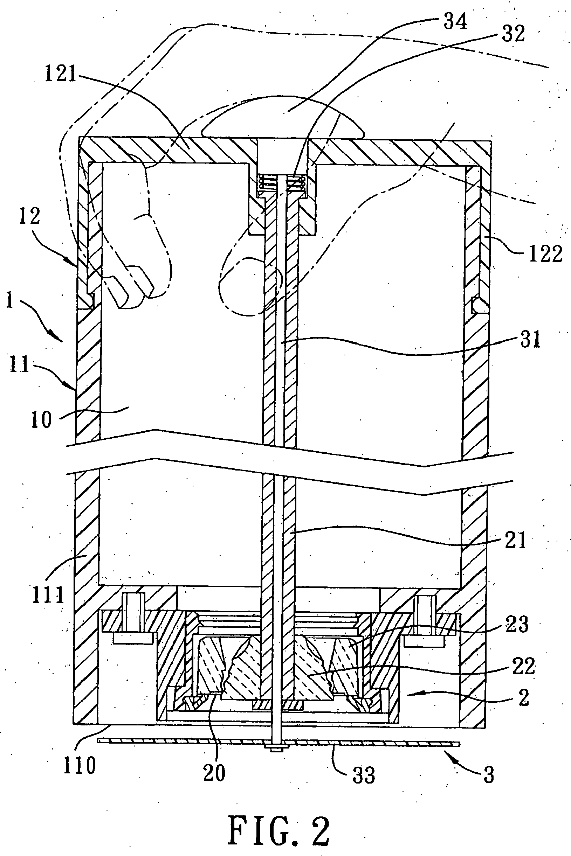

As shown in Figures 1 and 2, the first example comprises a receiving unit 1, a grinding unit 2, and a closure unit 3.

The receiving unit 1 includes a container body 11 and a cover member 12.

The container body 11 includes a surrounding container wall 111 that surrounds an axis (L) and that has a discharge end 110, and an annular mounting wall 112 that projects radially and inwardly from the surrounding container wall 111.

The cover member 12 is coupled co-rotatably to one end of the container body 11 opposite to the discharge end 110 of the container body 11, and cooperates with the container body 11 to define a receiving space 10 for receiving peppercorns (not shown). The cover member 12 has a cover wall 121, a surrounding wall 122 extending parallel to the axis (L) from a periphery of the cover wall 121 and coupled rotatably to the surrounding container wall 111 of the container body 11, and a stepped coupled wall 123 extending parallel to the axis (L) from a central part of the cover wall 121, extending in a direction toward the discharge end 110 of the container body 11, and having a coupling wall section 124 that is connected to the cover wall 121, and an abutting wall section 125 that extends from the coupling wall section 124 away from the cover wall 121, that has an internal diameter smaller than that of the coupling wall section 124, and that cooperates with the cover wall 121 and the coupling wall section 124 to define a retaining hole 126. In this example, the retaining hole 126 has an upper hole portion 1261 within the coupling wall section 124 of the coupling wall 123, and a lower hole portion 1262 within the abutting wall section 125 of the coupling wall 123, and has a rectangular cross-section.

The grinding unit 2 is operable for grinding the peppercorns in the receiving space 10 to result in ground pepper discharged through the discharge end 110 of the container body 11 of- the receiving unit 1. In this embodiment, the grinding unit 2 includes an elongated hollow coupling shaft 21 with a rectangular cross-section, and having opposite top and bottom shaft portions 211, 212. The top shaft portion 211 engages the lower hole portion 1262 of the retaining hole 126 in the cover member 12, such that the coupling shaft 21 is coupled co-rotatably to the cover member 12. The coupling shaft 21 further has a shaft hole 213 extending therethrough along the axis (L). The grinding unit 2 further includes an inner grinding seat 22 coupled co-rotatably to the bottom shaft portion 212 of the coupling shaft 21, a stationary outer grinding seat 23 surrounding the inner grinding seat 22 and cooperating with the inner grinding seat 22 to define a grinding opening 20 therebetween, a sleeve seat 24 surrounding the outer grinding seat 23, and a pair of screws 25 disposed for fastening the sleeve seat 24 on the annular mounting wail 112 of the container body 11. As such, rotation of the cover member 12 drives the coupling shaft 21 to rotate together with the inner grinding seat 22 relative to the outer grinding seat 23 for grinding the peppercorns in the receiving space 10 to result in ground pepper discharged through the grinding opening 20.

The closure unit 3 includes an elongated connecting rod 31, a press component 34, a closure member 33, and a resilient component 32. The connecting rod 31 extends movably through the shaft hole 213 of the coupling shaft 21 along the axis (L), and has opposite top and bottom ends 311, 312 along the axis (L). The closure member 33 is disposed under the grinding unit 2, is secured co-movably to the bottom end 312 of the connecting rod 31, and is formed as a horizontal plate with a diameter equal to that at the discharge end 110 of the container body 11. Movement of the connecting rod 31 along the axis (L) results in corresponding movement of the closure member 33 relative to the grinding unit 2 between a closed position (see Fig. 1) for blocking discharge of the ground pepper through the discharge end 110 of the container body 11, and an opened position (see Fig. 2) for permitting discharge of the ground pepper through the discharge end 110 of the container body 11. The press member 34 is coupled to the top end 311 of the connecting rod 31 and is operable for driving the connecting rod 31 to move the closure member 33 from the closed position to the opened position. The resilient component 32 is retained in the retaining hole 126 of the coupling wall 123 of the cover member 12, is sleeved on the top end 311 of the connecting rod 31, has two ends abutting respectively.against the press member 34 and the top shaft portion 211 of the coupling shaft 21, and is disposed to bias the press member 34 and the connecting rod 31 to move in a direction away from the discharge end 110 of the container body 11.

In use, when a force is applied to rotate the cover member 12, the coupling shaft 21 is driven to rotate together with the inner grinding unit 22 relative to the outer grinding unit 23 for grinding the peppercorns, in the receiving space 10 to result in ground pepper. Afterward, by pressing the press member 34 against biasing action of the resilient component 32, the closure member 33 is moved from the closed position to the opened position, thereby permitting discharge of the ground pepper through the discharge end 110, of the container body 11.

When the force applied on the press member 34 is removed, the connecting rod 31 and the press member 34 are biased by a restoring force of the resilient component 32 to move in the direction away from the discharge end 110 of the container body 11, thereby driving the closure member 33 to move from the opened position back to the closed position. Therefore, after use, the closure member 33 can affectively prevent residual ground pepper from falling out of the grinding unit 2 via the discharge end 110 of the container body 11.

It should be noted that, while the operating procedure of the pepper mill of this embodiment, including rotating the cover member 12 for grinding the peppercorns and operating the press member 34 for moving the closure member 33, is exemplified as two separate steps, the operating procedure should not be limited thereto. For example, a user may rotate the cover member 12 with his fingers while pushing the press member 34 with his palm simultaneously, thereby rotating the cover member 12 and pushing the press member 34 at the same time.

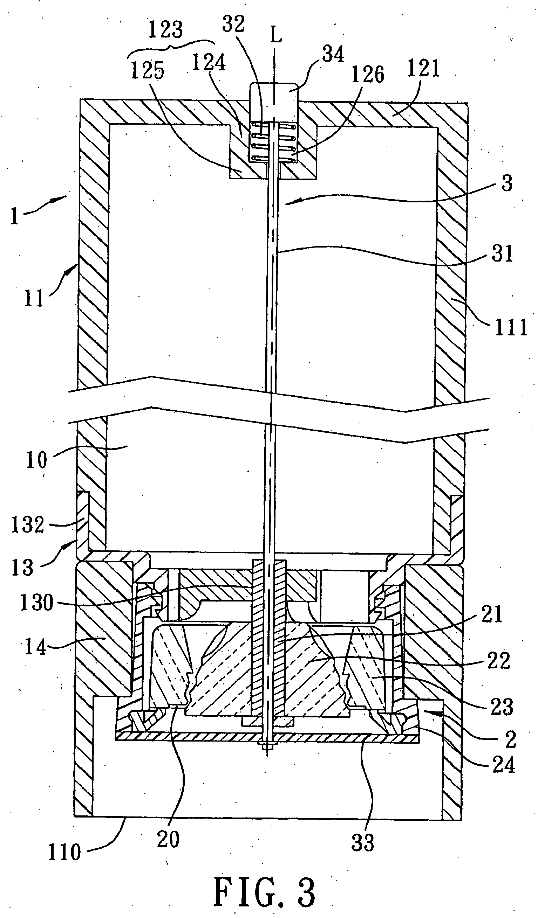

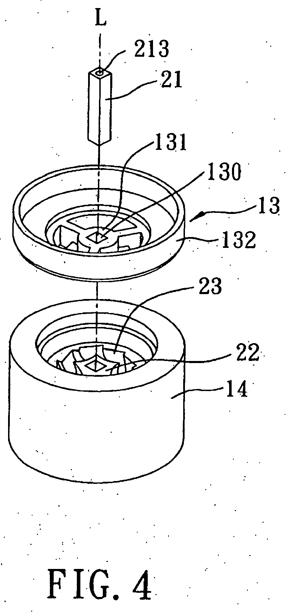

As shown in Figures 3 to 5, the second example of the pepper mill has a structure similar to that of the first embodiment. The main difference between this example and the previous one resides in the configurations of the receiving unit 1 and the coupling shaft 21.

In this example, the receiving unit 1 includes a container body 11 surrounding the axis (L) and defining the receiving space 10, a connecting seat 13 coupled co-rotatably to a bottom end of the container body 11, and a stationary end seat 14 connected to the connecting seat 13 and having the discharge end 110.

The container body 11 has a cover wall 121, a surrounding container wall 111 extending parallel to the axis (L) from a periphery of the cover wall 121 and extending in the direction toward the discharge end 110 of the end seat 14, and a stepped coupling wall 123 extending parallel to the axis (L) from the cover wall 121 and extending in the direction toward the discharge end 110 of the end seat 14. The coupling wall 123 has a coupling wall section 124 connected to the cover wall 121, and an abutting wall section 125 extending from the coupling wall section 124 away from the cover wall 121, having an internal diameter smaller than that of the coupling wall section 124, and cooperating with the cover wall 121 and the coupling wall 124 to define a retaining hole 126 for retaining the resilient component 32 of the closure unit 3 therein.

The connecting seat 13 includes an inner surrounding wall 131 surrounding the axis (L) and defining a rectangular shaft coupling hole 130, and an outer surrounding wall 132 surrounding and spaced apart from the inner surrounding wall 131.

In this example, the coupling shaft 21 has a rectangular cross-section, and engages the shaft coupling hole 130 of the connecting seat 13 such that an end thereof is coupled co-rotatably to the connecting seat 13, and an axially opposite end is coupled co-rotatably to the inner grinding seat 22 of the grinding unit 2. The closure member 33 of the closure unit 3 is formed as a horizontal plate with a diameter smaller than that at the discharge end 110 of the end seat 14, such that the closure member 33 blocks the grinding opening 20 in the grinding unit 2 when at the closed position (see Fig. 3).

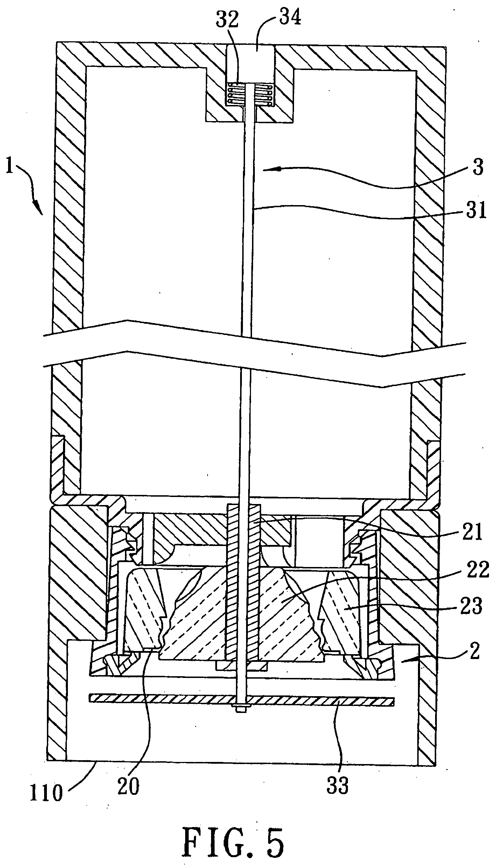

In use, when a force is applied to rotate the container body 11, the coupling shaft 21 and the connecting seat 13 are driven to rotate relative to the end seat 14, thereby driving the inner grinding unit 22 to rotate relative to the outer grinding unit 23 for grinding the peppercorns in the receiving space 10 to result in ground pepper. Afterward, by pressing the press member 34 against biasing action of the resilient component 32, the closure member 33 is moved by the connecting rod 31 of the closure unit 3 from the closed position to the opened position (see Fig. 5), thereby permitting discharge of the ground pepper through the discharge end 110 of the container body 11. When the force applied on the press member 34 is removed, the closure member 33 is moved from the opened position back to the closed position in the same manner as the previous embodiment. The second example has the same advantages as those of the first are.

It should be further noted that the closure members 33 of the closure units 3 of the abovementioned first and second preferred embodiments are interchangeable as long as the closure member 33 can prevent the ground pepper from falling out of the container body 11 when at the closed position.

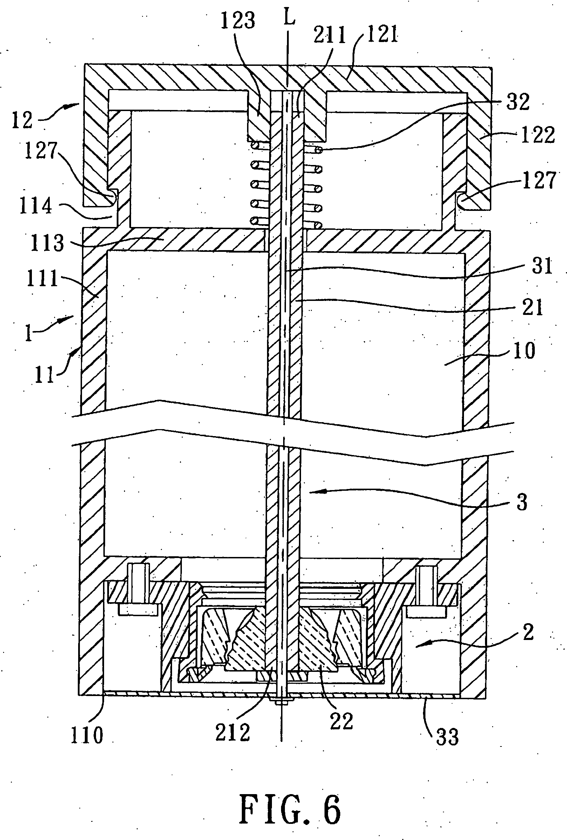

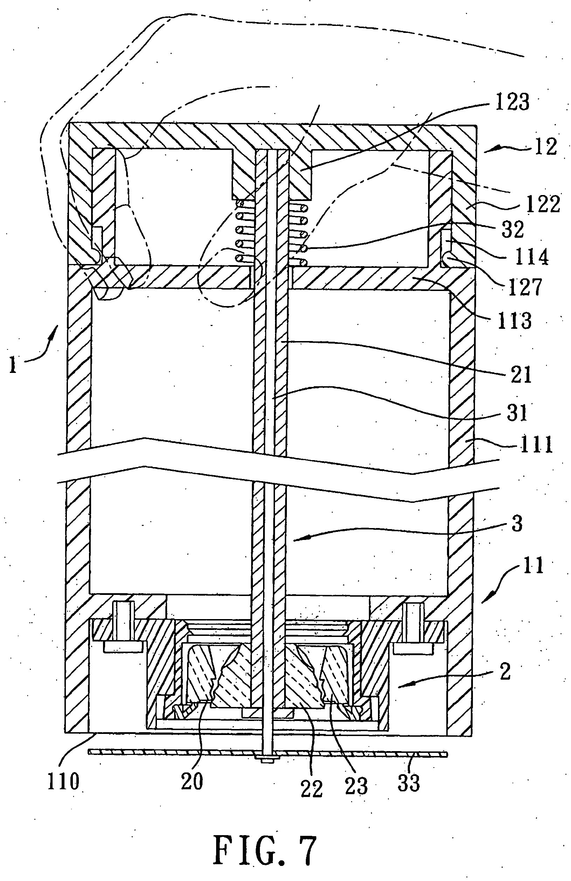

As shown in Figures 6 and 7, the embodiment of the pepper mill according to the present invention has a structure similar to that of the first example. The main difference between this embodiment and the first example resides in the configurations of the container body 11, the cover member 12, and the closure unit 3.

In this embodiment, the container body 11 surrounds the axis (L), defines the receiving space 10, and has the discharge end 110. The container body 11 includes a stepped surrounding container wall 111 surrounding the axis (L), and having a top portion and a bottom portion that has a diameter larger than that of the top portion and that is formed with an annular groove 114. The container body 11 further includes an abutment wall 113 extending radially and inwardly from the surrounding container wall 111.

The cover member 12 is coupled to the container body z and includes a cover wall 121, a surrounding wall 122 extending from a periphery of the cover wall 121 and extending in the direction toward the discharge end 110 of the container body 11, and an annular coupling wall 123 extending from the cover wall 121 and extending parallel to the axis (L). The surrounding wall 122 is formed with a pair of angularly spaced apart limiting blocks 127 movably retained in the annular groove 114 such that the cover member 12 is axially and rotatable movable relative to the container body 11.

The coupling shaft 21 of the grinding unit 2 has a top shaft portion 211 extending through the abutment wall 113 and coupled co-rotatably to the coupling wall 123 of the cover member 12, and a bottom shaft portion 212 opposite to the top shaft portion 211 along the axis (L) and coupled co-rotatably to the inner grinding seat 22.

The closure unit 3 includes a connecting rod 31, a closure member 33, and a resilient component 32. The connecting rod 31 extends through the coupling shaft 21 of the grinding unit 2, and has one end coupled to the cover member 12 such that the connecting rod 31 is movable along with the cover member 12 along the axis (L). The closure member 33 is coupled co-movably to the other end of the connecting rod 31. The resilient component 32 hays opposite ends abutting respectively against the abutment wall 113 of the container body 11 and the coupling wall 123 of the cover member 12 for biasing the cover member 12 to move in a direction away from the discharge end 110 of the container body 111.

In this embodiment, the cover member 12 is movable between an undepressed position (see Fig. 6), where the limiting blocks 127 abut against a top end of the annular groove 114 opposite to the discharge end 110 of the container body 11, and where the closure member 33 of the closure unit 3 is at the closed position for blocking discharge of the ground pepper through the discharge end 110 of the container body 11, and a depressed position (see Fig. 7), where the closure member 33 is at the opened position for permitting discharge of the ground pepper through the discharge end 110 of the container body 11.

In use, when a force is applied to rotate the cover member 12, the coupling shaft 21 is driven to rotate together with the inner grinding unit 22 relative to the outer grinding unit 23 for grinding the peppercorns in the receiving space 10 to result in ground pepper. At this time, by pressing the cover member 12 against biasing action of the resilient component 32, the closure member 33 is moved by the connecting rod 31 of the closure unit 3 from the closed position to the opened position, thereby permitting discharge of the ground pepper through the discharge end 110 of the container body 11. When the force applied on the cover member 12 is removed, the closure member 33 is moved from the opened position back to the closed position in the same manner as the previous embodiments. The third preferred embodiment has the same advantages as those of the first preferred embodiment.

It should be further noted that the number and configuration of the limiting blocks 127 may vary in other embodiments of this invention as long as the cover member 12 is axially and rotatable movable relative to the container body 11.

## Claims

1. A pepper mill comprising:
a hollow receiving unit (1) surrounding an axis (L), defining a receiving space (10) for receiving peppercorns, and having a discharge end (110) for discharging ground pepper;
a grinding unit (2) including a coupling shaft (21) that is disposed rotatably in said receiving space (10) and that has a shaft hole (213) extending therethrough along the axis (L), said grinding unit (2) being operable for grinding the peppercorns in said receiving space (10) to result in the ground pepper; and
a closure unit (3) including
an elongated connecting rod (31) that extends movably through said shaft hole (213) along the axis (L), and
a closure member (33) that is secured co-movably to said connecting rod (31), and that is disposed under said grinding unit (2), movement of said connecting rod (31) along the axis (L) resulting in corresponding movement of said closure member (33) relative to said grinding unit (2) between a closed position for blocking discharge of the ground pepper through said discharge end (110) of said receiving unit (1), and an opened position for permitting discharge of the ground pepper through said discharge end (110) of said receiving unit (1),
wherein said receiving unit (1) includes
a container body (11) surrounding the axis (L), defining said receiving space (10), and having said discharge end (110), and
a cover member (12) coupled to one end of said container body (11) opposite to said discharge end (110), rotatable about the axis (L) relative to said container body (11), and movable along the axis (L) relative to said container body (11);
said coupling shaft (21) being coupled to said cover member (12) so as to be co-rotatable therewith about the axis (L) ;
said connecting rod (31) of said closure unit (3) being coupled to said cover member (12) so as to be movable therewith along the axis (L);
said cover member (12) being movable between an undepressed position, where said closure member (33) of said closure unit (3) is at the closed position, and a depressed position, where said closure member (33) is at the opened position;
said closure unit (3) further including a resilient component (32) disposed to bias said cover member (12) and said connecting rod (31) to move in a direction away from said discharge end (110) of said container body (11);
wherein said cover member (12) of said receiving unit (1) has a cover wall (121), a surrounding wall (122) extending from a periphery of said cover wall (121), and a coupling wall (123) extending parallel to the axis (L) from said cover wall (121), and extending in the direction toward said discharge end (110) of said container body (11);
said container body (11) further has a surrounding container wall (111) surrounding the axis (L) and coupled to said surrounding wall (122) of said cover member (12), and an abutment wall (113) extending radially and inwardly from said surrounding container wall (122);
said resilient component (32) of said closure unit (3) has opposite ends abutting against said abutment wall (113) of said container body (11) and said coupling wall (123) of said cover member (12), respectively;
said coupling shaft (21) of said grinding unit (2) has a top shaft portion (211) extending through said abutment wall (113) and coupled co-rotatably to said coupling wall (123) of said cover member (12), and a bottom shaft portion (212) opposite to said top shaft portion (211) along the axis (L);
said grinding unit (2) further includes an inner grinding seat (22) coupled co-rotatably to said bottom shaft portion (212) of said coupling shaft (21), and a stationary outer grinding seat (23) surrounding said inner grinding seat (22) and cooperating with said inner grinding seat (22) to define a grinding opening (20) therebetween; and
rotation of said cover member (12) drives said coupling shaft (21) to rotate together with said inner grinding seat (22) relative to said outer grinding seat (23) for grinding the peppercorns to result in the ground pepper discharged through said grinding opening (20).

2. The pepper mill as claimed in claim 1, further **characterized in that**:
one of said surrounding container wall (111) of said container body (11) and said surrounding wall (122) of said cover member (12) is formed with an annular groove (114); and
the other one of said surrounding container wall (111) of said container body (11) and said surrounding wall (122) of said cover member (12) is formed with a limiting block (127) movably retained in said annular groove (114) such that said cover member (12) is axially and rotatably movable relative to said container body (11); and
said limiting block (127) abuts against a top end of said annular groove (114) opposite to said discharge end (110) of said container body (11) when said cover member (12) is at the undepressed position.

## Patentansprüche

1. Eine Pfeffermühle, die folgende Merkmale aufweist:
eine hohle Aufnahmeeinheit (1), die eine Achse (L) umgibt, einen Aufnahmeraum (10) zum Aufnehmen von Pfefferkörnern definiert und ein Abgabeende (110) zum Abgeben von gemahlenem Pfeffer aufweist;
eine Mahleinheit (2), die eine Kopplungswelle (21) umfasst, die in dem Aufnahmeraum (10) drehbar angeordnet ist und die ein Wellenloch (213) aufweist, das sich entlang der Achse (L) durch dieselbe hindurch erstreckt, wobei die Mahleinheit (2) zum Mahlen der Pfefferkörner in dem Aufnahmeraum (10) betreibbar ist, so dass sich der gemahlene Pfeffer ergibt; und
eine Schließeinheit (3), die Folgendes umfasst:
einen verlängerten Verbindungsstab (31), der sich entlang der Achse (L) durch das Wellenloch (213) bewegbar erstreckt, und
ein Schließbauglied (33), das an dem Verbindungsstab (31) gemeinsam bewegbar befestigt ist und das unter der Mahleinheit (2) angeordnet ist, wobei eine Bewegung des Verbindungsstabs (31) entlang der Achse (L) zu einer entsprechenden Bewegung des Schließbauglieds (33) relativ zu der Mahleinheit (2) zwischen einer geschlossenen Position zum Blockieren einer Abgabe des gemahlenen Pfeffers durch das Abgabeende (110) der Aufnahmeeinheit (1) und einer geöffneten Position zum Ermöglichen einer Abgabe des gemahlenen Pfeffers durch das Abgabeende (110) der Aufnahmeeinheit (1) führt,
wobei die Aufnahmeeinheit (1) Folgendes umfasst:
einen Behälterkörper (11), der die Achse (L) umgibt, den Aufnahmeraum (10) definiert und das Abgabeende (110) aufweist, und
ein Abdeckungsbauglied (12), das an ein Ende des Behälterkörpers (11) gegenüber dem Abgabeende (110) gekoppelt ist, um die Achse (L) relativ zu dem Behälterkörper (11) drehbar ist und entlang der Achse (L) relativ zu dem Behälterkörper (11) bewegbar ist;
die Kopplungswelle (21) an das Abdeckungsbauglied (12) gekoppelt ist, um mit demselben um die Achse (L) gemeinsam drehbar zu sein;
der Verbindungsstab (31) der Schließeinheit (3) an das Abdeckungsbauglied (12) gekoppelt ist, um mit demselben entlang der Achse (L) bewegbar zu sein;
das Abdeckungsbauglied (12) zwischen einer nicht niedergedrückten Position, bei der das Schließbauglied (33) der Schließeinheit (3) in der geschlossenen Position ist, und einer niedergedrückten Position, bei der das Schließbauglied (33) in der geöffneten Position ist, bewegbar ist;
die Schließeinheit (3) ferner eine federnde Komponente (32) umfasst, die angeordnet ist, das Abdeckungsbauglied (12) und den Verbindungsstab (31) vorzuspannen, um sich in einer Richtung weg von dem Abgabeende (110) des Behälterkörpers (11) zu bewegen;
wobei das Abdeckungsbauglied (12) der Aufnahmeeinheit (1) eine Abdeckungswand (121), eine umgebende Wand (122), die sich von einem Umfang der Abdeckungswand (121) erstreckt, und eine Kopplungswand (123) aufweist, die sich von der Abdeckungswand (121) parallel zu der Achse (L) erstreckt und sich in der Richtung hin zu dem Abgabeende (110) des Behälterkörpers (11) erstreckt;
der Behälterkörper (11) ferner eine umgebende Behälterwand (111), die die Achse (L) umgibt und an die umgebende Wand (122) des Abdeckungsbauglieds (12) gekoppelt ist, und eine Anstoßwand (113) aufweist, die sich von der umgebenden Behälterwand (122) radial und nach innen erstreckt;
die federnde Komponente (32) der Schließeinheit (3) gegenüberliegende Enden aufweist, die jeweils an die Anstoßwand (113) des Behälterkörpers (11) und die Kopplungswand (123) des Abdeckungsbauglieds (12) anstoßen;
die Kopplungswelle (21) der Mahleinheit (2) einen oberen Wellenabschnitt (211), der sich durch die Anstoßwand (113) erstreckt und an die Kopplungswand (123) des Abdeckungsbauglieds (12) gemeinsam drehbar gekoppelt ist, und einen unteren Wellenabschnitt (212) aufweist, der dem oberen Wellenabschnitt (211) entlang der Achse (L) gegenüberliegt;
die Mahleinheit (2) ferner eine innere Mahlauflage (22), die an den unteren Wellenabschnitt (212) der Kopplungswelle (21) gemeinsam drehbar gekoppelt ist, und eine feststehende äußere Mahlauflage (23) umfasst, die die innere Mahlauflage (22) umgibt und mit der inneren Mahlauflage (22) zusammenwirkt, um eine Mahlöffnung (20) zwischen denselben zu definieren; und
eine Drehung des Abdeckungsbauglieds (12) die Kopplungswelle (21) antreibt, sich zum Mahlen der Pfefferkörner zusammen mit der inneren Mahlauflage (22) relativ zu der äußeren Mahlauflage (23) zu drehen, so dass sich der gemahlene Pfeffer ergibt, der durch die Mahlöffnung (20) abgegeben wird.

2. Die Pfeffermühle gemäß Anspruch 1, ferner **gekennzeichnet dadurch, dass**:
eine der umgebenden Behälterwand (111) des Behälterkörpers (11) oder der umgebenden Wand (122) des Abdeckungsbauglieds (12) mit einer ringförmigen Rille (114) gebildet ist; und
die andere der umgebenden Behälterwand (111) des Behälterkörpers (11) oder der umgebenden Wand (122) des Abdeckungsbauglieds (12) mit einem Begrenzungsblock (127) gebildet ist, der in der ringförmigen Rille (114) bewegbar gehalten ist, so dass das Abdeckungsbauglied (12) relativ zu dem Behälterkörper (11) axial und drehbar bewegbar ist; und
der Begrenzungsblock (127) an ein oberes Ende der ringförmigen Rille (114) anstößt, das gegenüber dem Abgabeende (110) des Behälterkörpers (11) liegt, wenn das Abdeckungsbauglied (12) in der nicht niedergedrückten Position ist.

## Revendications

1. Moulin à poivre comprenant:
une unité de réception creuse (1) entourant un axe (L), définissant un espace de réception (10) destiné à recevoir des grains de poivre, et présentant une extrémité d'évacuation (110) destinée à évacuer le poivre moulu;
une unité de broyage (2) comportant un arbre de couplage (21) qui est disposé de manière rotative dans ledit espace de réception (10) et qui présente un trou d'arbre (213) s'étendant à travers ce dernier le long de l'axe (L), ladite unité de broyage (2) pouvant fonctionner pour broyer les grains de poivre dans ledit espace de réception (10) pour obtenir le poivre moulu; et
une unité de fermeture (3) comportant
une tige de connexion allongée (31) qui s'étend de manière à pouvoir se déplacer à travers ledit trou d'arbre (213) le long de l'axe (L), et
un élément de fermeture (33) qui est fixé à, de manière à pouvoir se déplacer ensemble avec, ladite tige de connexion (31), et qui est disposé sous ladite unité de broyage (2), le déplacement de ladite tige de connexion (31) le long de l'axe (L) résultant en un déplacement correspondant dudit élément de fermeture (33) par rapport à ladite unité de broyage (2) entre une position fermée, pour bloquer l'évacuation du poivre moulu à travers ladite extrémité d'évacuation (110) de ladite unité de réception (1), et une position ouverte, pour permettre l'évacuation du poivre moulu à travers ladite extrémité d'évacuation (110) de ladite unité de réception (1),
dans lequel ladite unité de réception (1) comporte
un corps de récipient (11) entourant l'axe (L), définissant ledit espace de réception (10), et présentant ladite extrémité d'évacuation (110), et
un élément de couvercle (12) couplé à une extrémité dudit corps de récipient (11) opposée à ladite extrémité d'évacuation (110), pouvant tourner autour de l'axe (L) par rapport audit corps de récipient (11), et pouvant se déplacer le long de l'axe (L) par rapport audit corps de récipient (11);
ledit arbre de couplage (21) étant couplé audit élément de couvercle (12) de manière à pouvoir tourner ensemble avec ce dernier autour de l'axe (L);
ladite tige de connexion (31) de ladite unité de fermeture (3) étant couplée audit élément de couvercle (12) de manière à pouvoir se déplacer avec ce dernier le long de l'axe (L);
ledit élément de couvercle (12) pouvant se déplacer entre une position non enfoncée, dans laquelle ledit élément de fermeture (33) de ladite unité de fermeture (3) se trouve en position fermée, et une position enfoncée, dans laquelle ledit élément de fermeture (33) se trouve en position ouverte;
ladite unité de fermeture (3) comportant par ailleurs un composant élastique (32) disposé de manière à dévier ledit élément de couvercle (12) et ladite tige de connexion (31) pour se déplacer dans une direction éloignée de ladite extrémité d'évacuation (110) dudit corps de récipient (11);
dans lequel ledit élément de couvercle (12) de ladite unité de réception (1) présente une paroi de couvercle (121), une paroi environnante (122) s'étendant à partir d'une périphérie de ladite paroi de couvercle (121), et une paroi de couplage (123) s'étendant parallèle à l'axe (L) à partir de ladite paroi de couvercle (121), et s'étendant en direction de ladite extrémité d'évacuation (110) dudit corps de récipient (11);
ledit corps de récipient (11) présente par ailleurs une paroi de récipient environnante (111) entourant l'axe (L) et couplée à ladite paroi environnante (122) dudit élément de couvercle (12), et une paroi de butée (113) s'étendant radialement et vers l'intérieur depuis ladite paroi de récipient environnante (122);
ledit composant élastique (32) de ladite unité de fermeture (3) présente des extrémités opposées aboutant respectivement contre ladite paroi de butée (113) dudit corps de récipient (11) et ladite paroi de couplage (123) dudit élément de couvercle (12);
ledit arbre de couplage (21) de ladite unité de broyage (2) présente une partie d'arbre supérieure (211) s'étendant à travers ladite paroi de butée (113) et couplée à, de manière à pouvoir tourner ensemble avec, ladite paroi de couplage (123) dudit élément de couvercle (12), et une partie d'arbre inférieure (212) opposée à ladite partie d'arbre supérieure (211) le long de l'axe (L);
ladite unité de broyage (2) comporte par ailleurs un siège de broyage intérieur (22) couplé à, de manière à pouvoir tourner ensemble avec, ladite partie d'arbre inférieure (212) dudit arbre de couplage (21), et un siège de broyage extérieur stationnaire (23) entourant ledit siège de broyage intérieur (22) et coopérant avec ledit siège de broyage intérieur (22) pour définir une ouverture de broyage (20) entre ces derniers; et
la rotation dudit élément de couvercle (12) entraîne ledit arbre de couplage (21) de manière à tourner ensemble avec ledit siège de broyage intérieur (22) par rapport audit siège de broyage extérieur (23) pour broyer les grains de poivre de manière à obtenir le poivre moulu évacué à travers ladite ouverture de broyage (20).

2. Moulin à poivre selon la revendication 1, **caractérisé par** ailleurs par le fait que:
l'une parmi ladite paroi de récipient environnante (111) dudit corps de récipient (11) et ladite paroi environnante (122) dudit élément de couvercle (12) est formée avec une rainure annulaire (114); et
l'autre parmi ladite paroi de récipient environnante (111) dudit corps de récipient (11) et ladite paroi environnante (122) dudit élément de couvercle (12) est formée avec un bloc de limitation (127) retenu de de manière à pouvoir se déplacer dans ladite rainure annulaire (114) de sorte que ledit élément de couvercle (12) puisse se déplacer axialement et de manière rotative par rapport audit corps de récipient (11); et
ledit bloc de limitation (127) aboute contre une extrémité supérieure de ladite rainure annulaire (114) opposée à ladite extrémité d'évacuation (110) dudit corps de récipient (11) lorsque ledit élément de couvercle (12) se trouve en position non enfoncée.
